# EUROPEAN PATENT APPLICATION

(11) **EP 4 742 058 A1**
(43) Date of publication of application: **13.05.2026**
(21) Application number: 25183673.0
(22) Date of filing: 18.06.2025
(51) Int. Cl.: G06F 16/532, G06F 16/583

(54) **IMAGE GENERATION METHOD AND DEVICE, INTELLIGENT AGENT, INTELLIGENT AGENT SYSTEM AND STORAGE MEDIUM**

(30) Priority: 11.11.2024 CN 202411603999
(71) Applicant: Beijing Baidu Netcom Science Technology Co., Ltd., Beijing 100085 (CN)
(72) Inventor: WANG, Haifeng, Beijing, 100085 (CN); LIU, Jiachen, Beijing, 100085 (CN); XIAO, Xinyan, Beijing, 100085 (CN); DING, Errui, Beijing, 100085 (CN); WANG, Jingdong, Beijing, 100085 (CN); WU, Hua, Beijing, 100085 (CN); WU, Tian, Beijing, 100085 (CN)
(74) Representative: Maiwald GmbH

(57) **Abstract**

The invention provides an image generation method and apparatus, an intelligent agent, an intelligent agent system and a storage medium, relates to the field of artificial intelligence technology, in particular to the field of computer vision, deep learning and large language models, and can be applied to an artificial intelligence generated content scene. The specific implementation solution includes: obtaining (101, 201, 301, 501, 601, 701) image generation requirement information; determining (102, 202, 502, 602, 702) a target image generation manner according to the image generation requirement information; querying (103, 305, 503) a first reference image based on the image generation requirement information; and based on the image generation requirement information and the first reference image, generating (104, 204, 306, 605) a target image using the target image generation manner.

## Description

### TECHNICAL FIELD

The present invention relates to the field of artificial intelligence technology, specifically to the field of computer vision, deep learning and large language models, and can be applied to an artificial intelligence generated content (AIGC) scene, in particular to an image generation method and apparatus, an intelligent agent, an intelligent agent system and a storage medium.

### BACKGROUND

The kernel of artificial intelligence (AI) image generation technology based on artificial intelligence generated content (AIGC) aims to use an AI image generation model to realize text-to-image conversion or image-to-image conversion. However, an image generation effect of the AI image generation technology highly depends on quality and timeliness of model training data. Specifically, after the AI image generation model is trained, its generated image content is often limited by the timeliness of the model training data. Before the model training data is updated, the AI image generation model cannot obtain the latest content, so there may be a certain lag in its generated image.

### SUMMARY

The present invention proposes an image generation method and apparatus, an intelligent agent, an intelligent agent system and a storage medium.

According to a first aspect of the present invention, an image generation method is provided, including: obtaining image generation requirement information; determining a target image generation manner according to the image generation requirement information; querying a first reference image based on the image generation requirement information; and generating a target image using the target image generation manner based on the image generation requirement information and the first reference image.

According to a second aspect of the present invention, an image generation method is provided, including: obtaining image generation requirement information; determining a target image generation manner according to the image generation requirement information; determining whether a reference image query needs to be performed for the image generation requirement information; querying a first reference image based on the image generation requirement information, in a case where the reference image query needs to be performed for the image generation requirement information; and generating a target image using the target image generation manner based on the image generation requirement information and the first reference image.

According to a third aspect of the present invention, an image generation apparatus is provided. The apparatus includes an obtaining module, configured to obtain image generation requirement information; a determining module, configured to determine a target image generation manner according to the image generation requirement information; a querying module, configured to query a first reference image based on the image generation requirement information; and a generating module, configured to generate a target image using the target image generation manner based on the image generation requirement information and the first reference image.

According to a fourth aspect of the present invention, an image generation apparatus is provided. The apparatus includes an obtaining module, configured to obtain image generation requirement information; a determining module, configured to determine a target image generation manner according to the image generation requirement information; a judging module, configured to determine whether a reference image query needs to be performed for the image generation requirement information; a querying module, configured to query a first reference image based on the image generation requirement information, in a case where the reference image query needs to be performed for the image generation requirement information; and a generating module, configured to generate a target image using the target image generation manner based on the image generation requirement information and the first reference image.

According to a fifth aspect of the present invention, an intelligent agent is provided, including an inputting module, configured to obtain image generation requirement information; a processing module, configured to determine a target image generation manner according to the image generation requirement information, query a first reference image based on the image generation requirement information, and generate a target image using the target image generation manner based on the image generation requirement information and the first reference image; and an outputting module, configured to output the target image.

According to a sixth aspect of the present invention, an intelligent agent is provided, including an inputting module, configured to obtain image generation requirement information; a processing module, configured to determine a target image generation manner according to the image generation requirement information, determine whether a reference image query needs to be performed for the image generation requirement information, query a first reference image based on the image generation requirement information in a case where the reference image query needs to be performed for the image generation requirement information, and generate a target image using the target image generation manner based on the image generation requirement information and the first reference image; and an outputting module, configured to output the target image.

According to a seventh aspect of the present invention, an intelligent agent system is provided, including at least one processor; and a memory connected to the at least one processor communicatively. The memory stores instructions executable by the at least one processor, the instructions are executed by the at least one processor, to cause the at least one processor to perform the image generation method according to the first aspect or the second aspect.

According to an eighth aspect of the present invention, a non-transitory computer-readable storage medium for storing computer instructions is provided. The computer instructions are used to cause a computer to perform the image generation method according to the first aspect or the second aspect.

According to a ninth aspect of the present invention, a computer program product including computer instructions is provided. When the computer instructions are executed by a processor, the image generation method according to the first aspect or the second aspect is implemented.

The present invention provides an image generation method and an apparatus, an intelligent agent, an intelligent agent system and a storage medium, which have the following beneficial effects.

The image generation requirement information is obtained, the corresponding target image generation manner is determined according to the image generation requirement information, the first reference image is queried based on the image generation requirement information, and the target image is generated using the target image generation manner based on the image generation requirement information and the first reference image. In the present invention, the target image is generated based on the queried first reference image, that is, an image retrieval-augmented generation (iRAG) technology is adopted, so that the timeliness of image generation is aligned with the timeliness of image search, thus avoiding the problem of possible lag in the target image. In addition, since image search covers almost all public knowledge, the present invention has no memory capacity bottleneck, and also solves the problem of limited memory capacity of the AI image generation model.

It should be understood that the content described in this section is not intended to identify key or important features of the embodiments of the invention, nor is it intended to limit the scope of the invention. Additional features of the invention will be easily understood based on the following description.

### BRIEF DESCRIPTION OF THE DRAWINGS

The drawings are used to better understand the solution and do not constitute a limitation to the invention, in which:
FIG. 1 is a flowchart of an image generation method according to an embodiment of the present invention;
FIG. 2 is a flowchart of an image generation method according to an embodiment of the present invention;
FIG. 3 is a flowchart of an image generation method according to an embodiment of the present invention;
FIG. 4 is a schematic diagram of an image-text interleaved feature according to an embodiment of the present invention;
FIG. 5 is a flowchart of an image generation method according to an embodiment of the present invention;
FIG. 6 is a flowchart of an image generation method according to an embodiment of the present invention;
FIG. 7 is a flowchart of an image generation method according to an embodiment of the present invention;
FIG. 8 is a block diagram of an image generation apparatus according to an embodiment of the present invention;
FIG. 9 is a block diagram of an image generation apparatus according to an embodiment of the present invention;
FIG. 10 is a block diagram of an intelligent agent according to an embodiment of the present invention; and
FIG. 11 is a block diagram of an intelligent agent system of an image generation method according to an embodiment of the present invention.

### DETAILED DESCRIPTION

The following describes the exemplary embodiments of the invention with reference to the accompanying drawings, which includes various details of the embodiments of the invention to facilitate understanding, which shall be considered merely exemplary. Therefore, those of ordinary skill in the art should recognize that various changes and modifications can be made to the embodiments described herein without departing from the scope of the invention. For clarity and conciseness, descriptions of well-known functions and structures are omitted in the following description.

In the technical solution of the present invention, collection, storage, use, processing, transmission, provision and invention of user personal information are all carried out with the user's consent, comply with the relevant laws and regulations, and do not violate public order and good morals.

An image generation method and apparatus, an intelligent agent, an intelligent agent system and a storage medium provided by embodiments of the present invention will be described below with reference to the accompanying drawings.

It should be noted that an execution subject of the image generation method of the embodiments is an image generation apparatus, which can be implemented by software and/or hardware and can be configured in an intelligent agent.

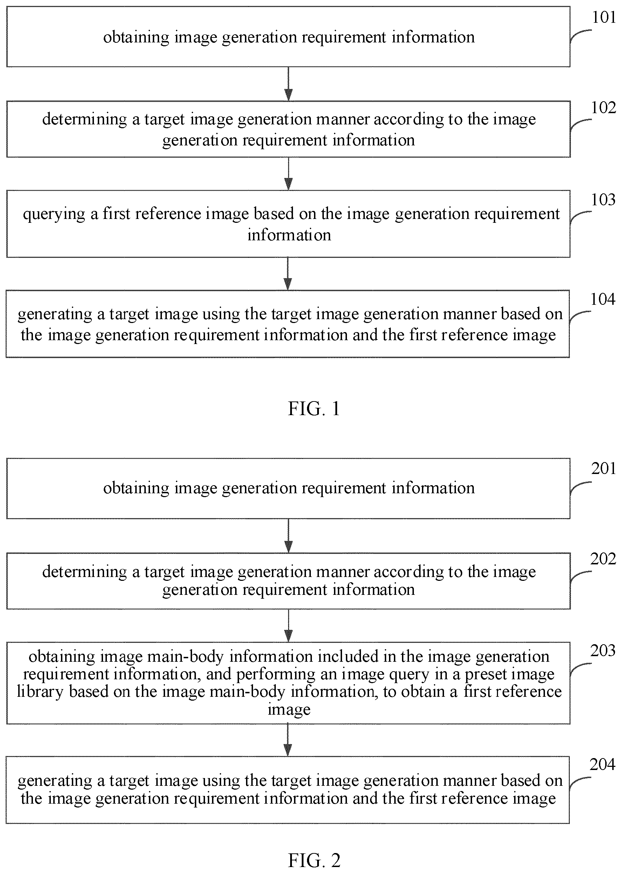

FIG. 1 is a flowchart of an image generation method according to an embodiment of the present invention.

As shown in FIG. 1, the image generation method may include the following steps.

At step 101, image generation requirement information is obtained.

The image generation requirement information may be used to indicate information such as image style, image main-body, and image size of an image to be generated.

As an example, the image generation requirement information may include an image generation requirement prompt input by a user.

As another example, the image generation requirement information may include a prompt input by the user and a reference image.

At step 102, a target image generation manner is determined according to the image generation requirement information.

An image generation manner corresponds to an image generation requirement. Different image generation requirements require different image generation manners. For example, different image generation manners may correspond to different AI image generation models.

As an example, the target image generation manner corresponding to the image generation requirement information may be determined according to a correspondence between image generation requirements and image generation manners.

As an example, the target image generation manner corresponding to the image generation requirement information may be determined based on a large model.

At step 103, a first reference image is queried based on the image generation requirement information.

Based on the image generation requirement information, an image query may be performed in a preset image library to obtain the first reference image. It should be noted that there may be one or more first reference images.

As an example, a vector feature corresponding to the image generation requirement information may be obtained, and similarity matching may be performed between the vector feature and a descriptive feature of each image in the image library to obtain the first reference image.

At step 104, a target image is generated using the target image generation manner based on the image generation requirement information and the first reference image.

The image generation requirement information and the first reference image are inputs of the target image generation manner. After obtaining the image generation requirement information and the first reference image, the image generation requirement information and the first reference image may be processed according to the target image generation manner to obtain the target image.

It should be noted that, in a case where the image generation requirement information includes a reference image, the user's editing intention for the reference image may be obtained based on the image generation requirement information; based on the image generation requirement information, the first reference image and the editing intention, the target image generation manner is adopted to generate the target image.

In this embodiment, the image generation requirement information is obtained, the corresponding target image generation manner is determined according to the image generation requirement information, the first reference image is queried based on the image generation requirement information, and the target image is generated using the target image generation manner based on the image generation requirement information and the first reference image. In the present invention, the target image is generated based on the queried first reference image, that is, an image retrieval-augmented generation (iRAG) technology is adopted, so that the timeliness of image generation is aligned with the timeliness of image search, thus avoiding the problem of possible lag in the target image. In addition, since image search covers almost all public knowledge, the present invention has no memory capacity bottleneck, and also solves the problem of limited memory capacity of the AI image generation model.

FIG. 2 is a flowchart of an image generation method according to an embodiment of the present invention.

As shown in FIG. 2, the image generation method may include the following steps.

At step 201, image generation requirement information is obtained.

At step 202, a target image generation manner is determined according to the image generation requirement information.

At step 203, image main-body information included in the image generation requirement information is obtained, and an image query is performed in a preset image library based on the image main-body information, to obtain a first reference image.

The image generation requirement information includes image main-body information, and the image main-body information may refer to main-body type, main-body name and other information.

For example, assuming that the image generation requirement information is "draw a red vehicle with a stylish and modern design and a futuristic atmosphere", the image main-body information may be a red vehicle. It should be noted that if the image generation requirement information also includes a vehicle model, the image main-body information may be a red vehicle and a vehicle model.

As an example, the image main-body information in the image generation requirement information may be extracted based on a large model, and then an image search is performed based on the image main-body information to obtain the first reference image.

By performing image query based on the image main-body information, a reference image that matches the image generation requirement may be accurately screened out from the image library, thereby improving the image generation effect.

A quality of the first reference image will affect the image generation effect. If the quality of the first reference image is poor, the quality of the final generated image may also be poor. Therefore, in order to ensure the image generation effect and further improve the quality of the generated image, as an example, based on the image main-body information, an image query is performed in the preset image library to obtain candidate reference images; an image quality of each candidate reference image is obtained, and a set quality requirement corresponding to the image generation requirement information is obtained; the candidate reference images are screened according to the image quality and the set quality requirement to obtain the first reference image.

Different image generation requirements correspond to different quality requirements. For example, if the image generation requirement is to generate a portrait, the corresponding quality requirement may be that a clarity of the face in the image is higher than a preset clarity threshold; if the image generation requirement is to generate a poster image, the corresponding quality requirement may be that the image does not include a watermark.

As a possible implementation, it is possible to determine whether the image quality of the candidate reference image meets the set quality requirement and select the candidate reference image whose image quality meets the set quality requirement as the first reference image.

As another possible implementation, the candidate reference images may be sorted in a descending order of image quality according to the image quality and the set quality requirement, and the first N candidate reference images may be used as the first reference images; where N is a positive integer.

At step 204, a target image is generated using the target image generation manner based on the image generation requirement information and the first reference image.

It should be noted that regarding the explanation of step 201, step 202 and step 204, reference may be made to the relevant description in any embodiment of the present invention, which will not be repeated here.

In this embodiment, the image generation requirement information is obtained, the corresponding target image generation manner is determined according to the image generation requirement information, the image main-body information included in the image generation requirement information is obtained, an image query is performed in the preset image library based on the image main-body information to obtain the first reference image, and the target image is generated using the target image generation manner based on the image generation requirement information and the first reference image. By perform the image query based on the image main-body information, the reference image that matches the image generation requirement may be accurately screened out from the image library, thereby improving the image generation effect.

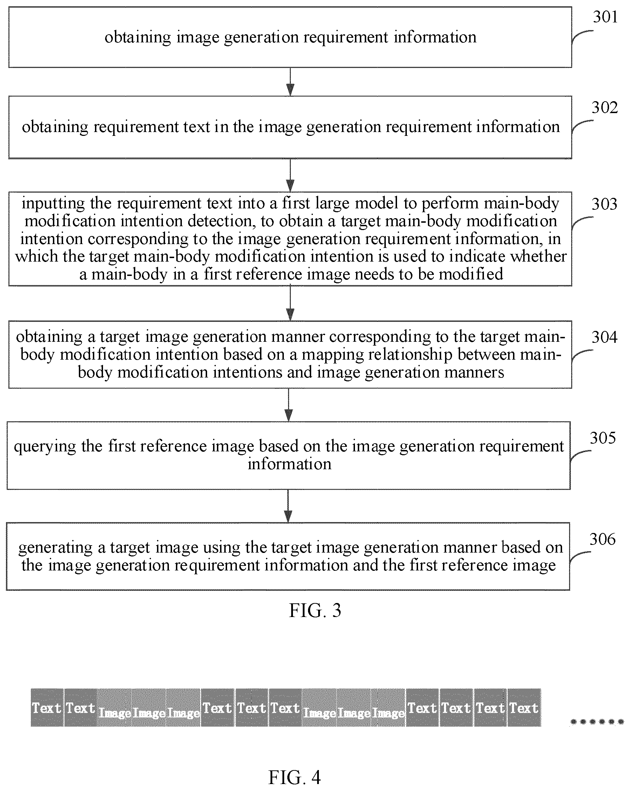

FIG. 3 is a flowchart of an image generation method according to an embodiment of the present invention.

As shown in FIG. 3, the image generation method may include the following steps.

At step 301, image generation requirement information is obtained.

At step 302, requirement text in the image generation requirement information is obtained.

The requirement text may refer to a prompt in the image generation requirement information.

At step 303, the requirement text is inputted into a first large model to perform main-body modification intention detection, to obtain a target main-body modification intention corresponding to the image generation requirement information, in which the target main-body modification intention is used to indicate whether a main-body in a first reference image needs to be modified.

The first large model may determine, based on the requirement text, whether the main-body in the first reference image needs to be modified during the image generation. If the target main-body modification intention indicates that the main-body in the first reference image needs to be modified, the image generation requirement information corresponds to a high cognition-oriented generalized requirement scenario; if the target main-body modification intention indicates that the main-body in the first reference image does not need to be modified, the image generation requirement information corresponds to a pixel-level-oriented fidelity requirement scenario.

For example, if the image generation requirement information is "generate an image of a model A vehicle driving in a desert" or "generate an image of a model A vehicle traveling through a forest", the target main-body modification intention corresponding to the image generation requirement information is that the main-body in the first reference image does not need to be modified. If the image generation requirement information is "generate an image of a person B wearing clothes of style C" or "generate an image of a doll of person B", the target main-body modification intention corresponding to the image generation requirement information is that the main-body in the first reference image needs to be modified.

It should be noted that, if the image generation requirement information includes a second reference image input by the user, the main-body modification intention obtained by performing the main-body modification intention detection may also be used to indicate whether the main-body in the second reference image needs to be modified.

At step 304, a target image generation manner corresponding to the target main-body modification intention is obtained based on a mapping relationship between main-body modification intentions and image generation manners.

Different main-body modification intentions correspond to different image generation manners. As an example, the mapping relationship between main-body modification intentions and image generation manners may be preset, and after determining the target main-body modification intention, the corresponding target image generation manner may be determined based on the preset mapping relationship.

Different main-body modification intentions need to focus on different emphasis points when generating images. Therefore, selecting the image generation manner that matches the main-body modification intention may significantly improve the effect and efficiency of image generation.

At step 305, the first reference image is queried based on the image generation requirement information.

At step 306, a target image is generated using the target image generation manner based on the image generation requirement information and the first reference image.

In order to extract key features from the requirement text, the requirement text may be encoded to obtain a text feature.

The image generation process will be described by combining the image generation manners corresponding to two main-body modification intentions.

As an example, in response to the target main-body modification intention indicating that the main-body in the first reference image does not need to be modified, feature extraction is performed on the first reference image to obtain a first image feature, and a main-body segmentation image in the first reference image is obtained; the first image feature and the text feature are input into a first image generation model to obtain a background image and main-body layout information; based on the main-body layout information, the main-body segmentation image and the background image are fused to obtain the target image.

The image generation manner corresponding to this example may be called an accurate image generation manner; the first image feature may refer to a vector feature obtained using a small-scale feature extractor; the main-body segmentation image may refer to an image of the main-body part obtained by semantically segmenting the first reference image; the background image may refer to an image of the background part other than the main-body part; the main-body layout information is used to indicate a layout of the main-body in the background image. For example, the main-body layout information includes information such as a position and a size of the main-body in the background image.

In the present invention, the content of the first reference image obtained from the pixel level may be the main-body segmentation image. The main-body segmentation image not only retains key details and features of the main-body in the first reference image and achieves strong fidelity of the main-body, but also ensures an integrity of the main-body in the target image. In addition, image fusion performed based on the main-body layout information may make the main-body naturally integrated into the background image and maintain harmony and unity with other parts of the background image.

As another example, in response to the target main-body modification intention indicating that the main-body in the first reference image needs to be modified, feature extraction is performed on the first reference image to obtain a second image feature; based on descriptive objects corresponding to each sub-feature in the text feature and the second image feature, the text feature and the second image feature are spliced in an interleaved manner to obtain an image-text interleaved feature; the image-text interleaved feature is input into a second image generation model to obtain the target image.

The image generation manner corresponding to this example may be called a highly generalized image generation manner; the second image feature is a vector feature, and the second image feature and the first image feature may be different; the text feature includes text sub-features, and the image feature includes image sub-features, and the text sub-features and the image sub-features correspond to descriptive objects respectively; splicing in an interleaved manner refers to combining the image feature and the text feature in a certain way (for example, the text sub-features and image sub-features corresponding to the same descriptive object are spliced together) to form a new coding feature, that is, the image-text interleaved feature. With reference to FIG. 4, which is a schematic diagram of the image-text interleaved feature; this manner combines the two different modal information of the image feature and the text feature in a specific way, thereby realizing an association between multimodal features.

For example, assuming that the image generation requirement information is "generate an image of dolls person B and person D", the corresponding descriptive objects include person B and person D. Person B has corresponding text sub-features and image sub-features, and person D also has corresponding text sub-features and image sub-features. When performing splicing in an interleaved manner, the image sub-features corresponding to person B may be inserted after the text sub-features corresponding to person B in the text feature, and the image sub-features corresponding to person D may be inserted after the text sub-features corresponding to person D in the text feature.

The text feature and the second image feature are spliced in an interleaved manner to achieve precise alignment of the two features on descriptive objects. The method of splicing in an interleaved manner not only retains key information in each feature, but also promotes deep fusion of the text feature and the image feature. When generating the target image based on the image-text interleaved feature, not only characteristics of the main-body in the first reference image are fully considered, but also generalized secondary creation may be performed while taking into account the fidelity of the main-body, so that the image generation effect is better.

The image generation requirement information may include a second reference image input by the user. In this case, the method for obtaining the image-text interleaved feature includes: performing feature extraction on the second reference image to obtain a third image feature; based on descriptive objects corresponding to sub-features in the text feature, the second image feature and the third image feature, the text feature, the second image feature and the third image feature may be spliced in an interleaved manner to obtain the image-text interleaved feature.

For example, assuming that the image generation requirement information includes a second reference image of person B and "generate a group photo image of dolls of person B and person D", in this case, when generating the target image, it is required to splice text sub-features corresponding to person B and image sub-features of person B in the third image feature in an interleaved manner, and to splice text sub-features corresponding to person D and image sub-features of person D in the second image feature in an interleaved manner.

In a case where the image generation requirement information includes a second reference image input by the user, the features are spliced in an interleaved manner based on the requirement text, the first reference image and the second reference image input by the user to generate the target image, which not only meets the user's personalized image generation requirements and achieves flexible personalized image generation, but also ensures the image generation effect.

In addition, for non-public knowledge, the present invention may avoid the problem of the image generation model lacking memory of these contents by allowing users to independently provide reference images.

It should be noted that regarding the explanation of step 301, step 302 and step 305, reference may be made to the relevant description in any embodiment of the present invention, which will not be repeated here.

In this embodiment, the image generation requirement information is obtained, the requirement text in the image generation requirement information is obtained, the requirement text is input into the first large model for main-body modification intention detection to obtain the target main-body modification intention corresponding to the image generation requirement information, the main-body modification intention is used to indicate whether the main-body in the first reference image needs to be modified, the target image generation manner corresponding to the main-body modification intention based on the mapping relationship between main-body modification intentions and image generation manners, the first reference image is queried based on the image generation requirement information, and the target image is generated using the target image generation manner based on the image generation requirement information and the first reference image. Different main-body modification intentions need to focus on different emphasis points when generating images. Therefore, selecting an image generation manner that matches the main-body modification intention may significantly improve the effect and efficiency of image generation.

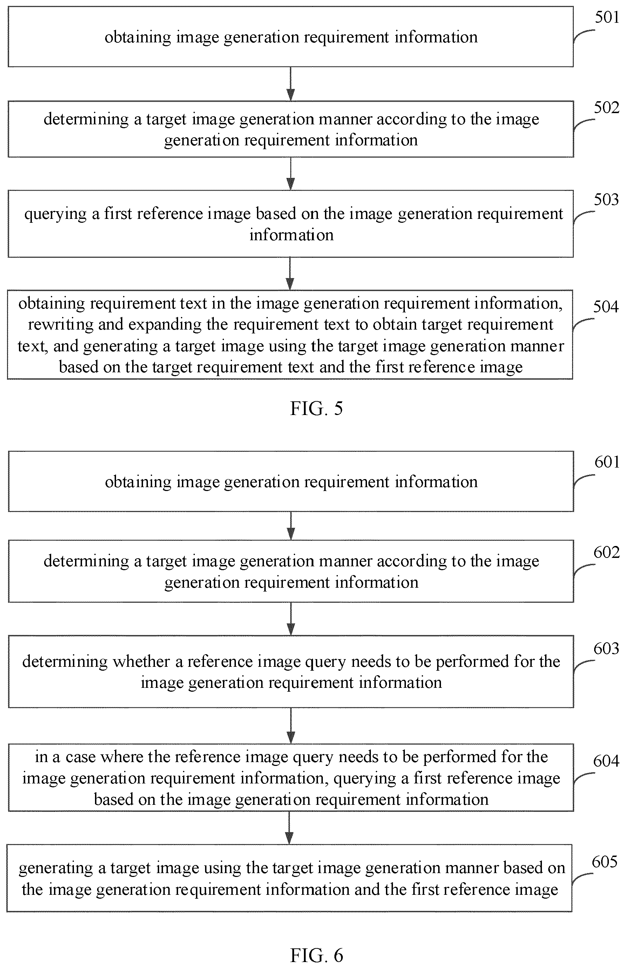

FIG. 5 is a flowchart of an image generation method according to an embodiment of the present invention.

As shown in FIG. 5, the image generation method may include the following steps.

At step 501, image generation requirement information is obtained.

At step 502, a target image generation manner is determined according to the image generation requirement information.

At step 503, a first reference image is queried based on the image generation requirement information.

At step 504, requirement text in the image generation requirement information is obtained, the requirement text is rewritten and expanded to obtain target requirement text, and a target image is generated using the target image generation manner based on the target requirement text and the first reference image.

Compared with the requirement text, the target requirement text has a more regular format and a more comprehensive detailed description. As an example, the requirement text may be input into a large model, so that the large model may rewrite and expand the requirement text based on core picture content, picture style description, picture man-body and limitation description, picture detail description, picture background modification description, special effect, composition, color tone, clarity description, quality description and other dimensions.

The requirement text in the image generation requirement information may have problems such as abstractness and vague expression. Directly generating images based on the requirement text often cannot produce the best output result. Therefore, in the present invention, the requirement text is rewritten and expanded to improve the image generation effect.

As another example, context information of the image generation requirement information is obtained; in a case where the image generation requirement information includes a second reference image input by the user, descriptive information of the second reference image is obtained; at least one of the context information or the descriptive information, as well as the requirement text, are input into a second large model for rewriting and expansion to obtain the target requirement text.

The second large model and the first large model may be the same large model or may refer to different large models.

During the image generation, the image generation requirement information provided by the user may sometimes be incomplete, which may cause the generated image to deviate from the user's expectation. In order to more accurately understand the user's requirements and improve an accuracy and an effect of the image generation, in the present invention, context information related to the image generation requirement information may be further obtained, and the descriptive information of the second reference image is obtained when the user inputs the second reference image. Combined with these information, the present invention may more comprehensively understand the user's true image generation intention, thereby improving the image generation effect and improving the user experience.

It should be noted that regarding the explanation of steps 501 to 503, reference may be made to the relevant description in any embodiment of the present invention, which will not be repeated here.

**In** this embodiment, the requirement text in the image generation requirement information is obtained, the requirement text is rewritten and expanded to obtain the target requirement text, and the target image is generated using the target image generation manner based on the target requirement text and the first reference image. Since there may be problems such as abstractness and vague expression in the requirement text in the image generation requirement information, the best output result is often not obtained by directly generating images based on the requirement text. Therefore, in the present invention, the requirement text is rewritten and expanded to improve the image generation effect.

FIG. 6 is a flowchart of an image generation method according to an embodiment of the present invention.

As shown in FIG. 6, the image generation method may include the following steps.

At step 601, image generation requirement information is obtained.

At step 602, a target image generation manner is determined according to the image generation requirement information.

At step 603, it is determined whether a reference image query needs to be performed for the image generation requirement information.

When performing image generation, not all image generation requirements need to be enhanced through retrieval enhancement to improve the effect. For example, if the image generation requirement information is "draw a little rabbit", it can be processed by a general text-based image generation model itself, and there is no need to trigger the retrieval enhancement. Based on this, in order to avoid unnecessary complex calculations and resource waste, reference image query judgment is performed before performing the image generation in the present invention.

As an example, the image generation requirement information may be input into a third large model, and the third large model is used to determine whether a reference image query needs to be performed for the image generation requirement information. The third large model, the second large model and the first large model may be the same large model or different large models.

At step 604, in a case where the reference image query needs to be performed for the image generation requirement information, a first reference image is queried based on the image generation requirement information.

At step 605, a target image is generated using the target image generation manner based on the image generation requirement information and the first reference image.

It should be noted that regarding the explanation of step 601, step 602, step 604, and step 605, reference may be made to the relevant description in any embodiment of the present invention, which will not be repeated here.

**In** this embodiment, the image generation requirement information is obtained, the corresponding target image generation manner is determined according to the image generation requirement information, it is determined whether a reference image query needs to be performed for the image generation requirement information, in a case where the reference image query needs to be performed for the image generation requirement information, the first reference image is queried based on the image generation requirement information, and the target image is generated using the target image generation manner based on the image generation requirement information and the first reference image. In the present invention, it is determined whether the reference image query needs to be performed for the image generation requirement information, and in the case where the reference image query needs to be performed for the image generation requirement information, the iRAG technology is used for image generation, which not only aligns the timeliness of image generation with the timeliness of image search and avoids the problem of possible lag in the target image, but also avoids unnecessary complex calculations and resource waste when retrieval image enhancement is not required, thereby improving the overall image generation efficiency. In addition, since image search covers almost all public knowledge, the present invention has no memory capacity bottleneck, and also solves the problem of limited memory capacity of the AI image generation model.

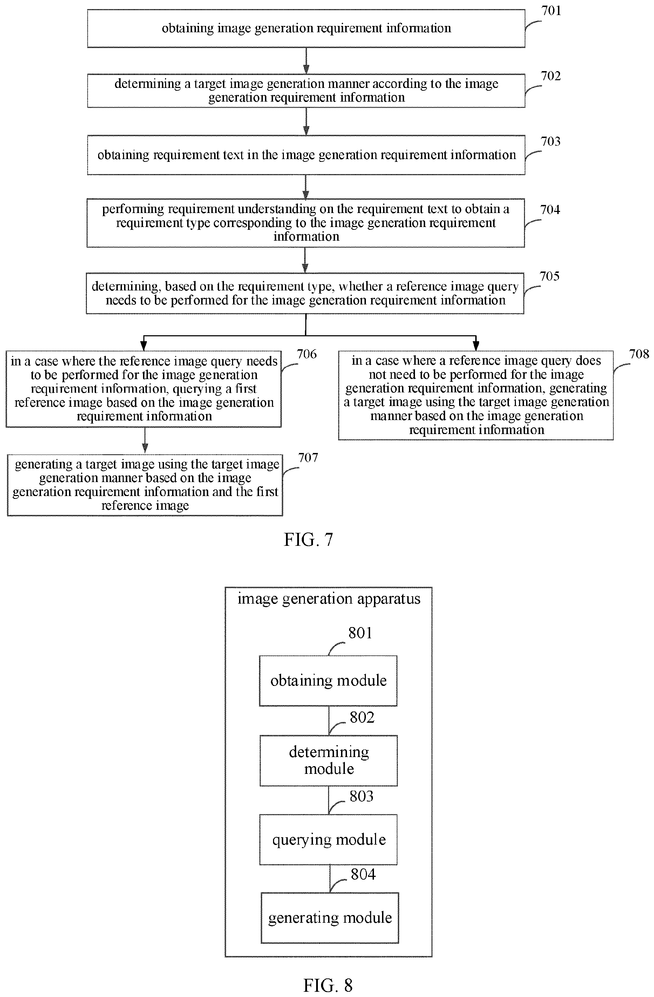

FIG. 7 is a flowchart of an image generation method according to an embodiment of the present invention.

As shown in FIG. 7, the image generation method may include the following steps.

At step 701, image generation requirement information is obtained.

At step 702, a target image generation manner is determined according to the image generation requirement information.

In addition to a precise image generation manner and a highly generalized image generation manner, the present invention also provides a general text-based image generation manner and an image-based image generation manner as the safety net. According to the image generation requirement information, a matching target image generation manner may be selected from the aforementioned image generation manners.

For example, assuming that the image generation requirement information is "draw a little rabbit", the corresponding target image generation manner may be the general text-based image generation manner; assuming that the image generation requirement information is "draw a Flemish giant rabbit", the corresponding target image generation manner may be the precise image generation manner.

As an example, requirement text in the image generation requirement information is obtained; the requirement text is inputted into a first large model for main-body modification intention detection to obtain a target main-body modification intention corresponding to the image generation requirement information, in which the target main-body modification intention is used to indicate whether a main-body in the first reference image needs to be modified; based on a mapping relationship between main-body modification intentions and image generation manners, the target image generation manner corresponding to the target main-body modification intention is obtained.

At step 703, requirement text in the image generation requirement information is obtained.

At step 704, requirement understanding is performed on the requirement text to obtain a requirement type corresponding to the image generation requirement information.

The requirement type may be used to indicate a knowledge type involved in the image generation requirement information. For example, the requirement type includes simple knowledge, professional knowledge, long-tail knowledge, time-sensitive knowledge, and the like.

As an example, the requirement text may be inputted into a fourth large model for requirement understanding to obtain the requirement type corresponding to the image generation requirement information. The fourth large model, the third large model, the second large model, and the first large model may be the same large model or different large models.

At step 705, it is determined, based on the requirement type, whether a reference image query needs to be performed for the image generation requirement information.

There is a correspondence between requirement types and situations indicating whether the reference image query needs to be performed. For example, simple knowledge does not require the reference image query, that is, there is no need to obtain the first reference image. Professional knowledge, long-tail knowledge, and time-sensitive knowledge require the reference image query, that is, the first reference image needs to be obtained.

When processing image generation requirements, considering that not all requirements need to be enhanced through retrieval enhancement to improve the effect, the present invention adopts an intelligent strategy, that is, flexibly deciding whether to perform the reference image query according to the requirement type. By accurately judging the requirements, the present invention may implement the retrieval enhancement in a targeted manner, which not only avoids excessive retrieval enhancement load, but also achieves optimal resource allocation while meeting user requirements, thus avoiding unnecessary resource waste.

At step 706, in a case where the reference image query needs to be performed for the image generation requirement information, a first reference image is queried based on the image generation requirement information.

As an example, image main-body information included in the image generation requirement information is obtained; based on the image main-body information, an image query is performed in a preset image library to obtain the first reference image.

As another example, the image main-body information included in the image generation requirement information is obtained; based on the image main-body information, the image query is performed in the preset image library to obtain candidate reference images; an image quality of each candidate reference image is obtained, and a set quality requirement corresponding to the image generation requirement information is obtained; and the candidate reference images are screened according to the image quality and the set quality requirement to obtain the first reference image.

At step 707, a target image is generated using the target image generation manner based on the image generation requirement information and the first reference image.

As an example, the requirement text corresponds to a text feature, and in response to the target main-body modification intention indicating that the main-body in the first reference image does not need to be modified, feature extraction is performed on the first reference image to obtain a first image feature, and a main-body segmentation image in the first reference image is obtained; the first image feature and the text feature are inputted into a first image generation model to obtain a background image and main-body layout information; according to the main-body layout information, the main-body segmentation image and the background image are fused to obtain the target image.

As another example, the requirement text corresponds to a text feature, and in response to the target main-body modification intention indicating that the main-body in the first reference image needs to be modified, feature extraction is performed on the first reference image to obtain a second image feature; the second image feature and the text feature are spliced in an interleaved manner based on descriptive objects corresponding to sub-features in the text feature and the second image feature, to obtain an image-text interleaved feature; the image-text interleaved feature is inputted into a second image generation model to obtain the target image.

As a possible implementation of the embodiments of the present invention, based on the descriptive objects corresponding to the sub-features in the text feature and the second image feature, splicing the text feature and the second image feature in an interleaved manner to obtain the image-text interleaved feature, includes: performing feature extraction on a second reference image input by the user and included in the image generation requirement information to obtain a third image feature; based on descriptive objects corresponding to sub-features in the text feature, the second image feature and the third image feature, the text feature, the second image feature and the third image feature are spliced in an interleaved manner to obtain the image-text interleaved feature.

As an example, requirement text in the image generation requirement information is obtained; the requirement text is rewritten and expanded to obtain target requirement text; a target image is generated using the target image generation manner based on the target requirement text and the first reference image to generate the target image.

As an example, context information of the image generation requirement information is obtained; in a case where the image generation requirement information includes a second reference image input by a user, descriptive information of the second reference image is obtained; at least one of the context information or the descriptive information, as well as the requirement text, are input into a second large model for rewriting and expansion to obtain the target requirement text.

At step 708, in a case where a reference image query does not need to be performed for the image generation requirement information, a target image is generated using the target image generation manner based on the image generation requirement information.

In a case where the reference image query does not need to be performed, the present invention may also efficiently and accurately complete image generation tasks based on the image generation requirement information, so as to meet diverse image generation requirements, and thus broaden the application scenarios of the present invention.

As an example, if the detected main-body modification intention indicates that there is no need to modify the main-body in the second reference image, the target image generation manner can be a precise image generation manner. Specifically, feature extraction is performed on the second reference image to obtain a fourth image feature, and a main-body segmentation image in the second reference image is obtained; the fourth image feature and the text feature are input into the first image generation model to obtain a background image and main-body layout information; according to the main-body layout information, the main-body segmentation image and the background image are fused to obtain the target image.

As another example, if the detected main-body modification intention indicates that the main-body in the second reference image needs to be modified, the target image generation manner may be a highly generalized image generation manner. Specifically, feature extraction is performed on the second reference image to obtain a fifth image feature; based on descriptive objects corresponding to sub-features in the text feature and the fifth image feature, the text feature and the fifth image feature are spliced in an interleaved manner to obtain the image-text interleaved feature; the image-text interleaved feature is input into a second image generation model to obtain the target image.

It should be noted that regarding the explanation of step 701, step 702, step 703, step 706 and step 707, reference may be made to the relevant description in any embodiment of the present invention, which will not be repeated here.

In this embodiment, the requirement text in the image generation requirement information is obtained; the requirement understanding is performed on the requirement text to obtain the requirement type corresponding to the image generation requirement information; based on the requirement type, it is determined whether a reference image query needs to be performed for the image generation requirement information; in a case where the reference image query does not need to be performed for the image generation requirement information, the target image is generated using the target image generation manner based on the image generation requirement information; in a case where the reference image query needs to be performed for the image generation requirement information, the first reference image is queried based on the image generation requirement information, and the target image is generated using the target image generation manner based on the image generation requirement information and the first reference image. Considering that not all requirements need to be enhanced through retrieval enhancement to improve the effect, the present invention flexibly determines whether to obtain the first reference image according to the requirement type. By accurately judging the requirements, the present invention may implement the retrieval enhancement in a targeted manner, which not only avoids excessive retrieval enhancement load, but also achieves optimal resource allocation while meeting user requirements, thus avoiding unnecessary resource waste.

FIG. 8 is a block diagram of an image generation apparatus according to an embodiment of the present invention.

As shown in FIG. 8, the image generation apparatus includes an obtaining module 801, a determining module 802, a querying module 803 and a generating module 804.

The obtaining module 801 is configured to obtain image generation requirement information. The determining module 802 is configured to determine a target image generation manner according to the image generation requirement information. The querying module 803 is configured to query a first reference image based on the image generation requirement information. The generating module 804 is configured to generate a target image using the target image generation manner based on the image generation requirement information and the first reference image.

As a possible implementation of the embodiments of the present invention, the querying module 803 is configured to: obtain image main-body information comprised in the image generation requirement information; and perform an image query in a preset image library based on the image main-body information, to obtain the first reference image.

As a possible implementation of the embodiments of the present invention, the querying module 803 is configured to: perform the image query in the preset image library based on the image main-body information, to obtain candidate reference images; obtain an image quality of each candidate reference image, and obtain a set quality requirement corresponding to the image generation requirement information; and screen the candidate reference images according to the image quality and the set quality requirement to obtain the first reference image.

As a possible implementation of the embodiments of the present invention, the determining module 802 is configured to: obtain requirement text in the image generation requirement information; input the requirement text into a first large model to perform main-body modification intention detection, to obtain a target main-body modification intention corresponding to the image generation requirement information, in which the target main-body modification intention is used to indicate whether a main-body in the first reference image needs to be modified; and obtain the target image generation manner corresponding to the target main-body modification intention based on a mapping relationship between main-body modification intentions and image generation manners.

As a possible implementation of the embodiments of the present invention, the requirement text corresponds to a text feature, and the generating module 804 is configured to: in response to the target main-body modification intention indicating that the main-body in the first reference image does not need to be modified, perform feature extraction on the first reference image to obtain a first image feature, and obtain a main-body segmentation image in the first reference image; input the first image feature and the text feature into a first image generation model to obtain a background image and main-body layout information; and fuse the main-body segmentation image and the background image according to the main-body layout information to obtain the target image.

As a possible implementation of the embodiments of the present invention, the requirement text corresponds to a text feature, and the generating module 804 is configured to: in response to the target main-body modification intention indicating that the main-body in the first reference image needs to be modified, perform feature extraction on the first reference image to obtain a second image feature; splice the text feature and the second image feature in an interleaved manner based on descriptive objects corresponding to sub-features in the text feature and the second image feature, to obtain an image-text interleaved feature; and input the image-text interleaved feature into a second image generation model to obtain the target image.

As a possible implementation of the embodiments of the present invention, the image generation requirement information includes a second reference image input by a user, and the generating module 804 is configured to: perform feature extraction on the second reference image to obtain a third image feature; and splice the text feature, the second image feature and the third image feature in the interleaved manner based on the descriptive objects corresponding to the sub-features in the text feature, the second image feature and the third image feature, to obtain the image-text interleaved feature.

As a possible implementation of the embodiments of the present invention, the generating module 804 is configured to: obtain requirement text in the image generation requirement information; rewrite and expand the requirement text to obtain target requirement text; and generate the target image using the target image generation manner based on the target requirement text and the first reference image.

As a possible implementation of the embodiments of the present invention, the generating module 804 is configured to: obtain context information of the image generation requirement information; in a case where the image generation requirement information includes a second reference image input by a user, obtain descriptive information of the second reference image; and input the requirement text and at least one of the context information or the descriptive information into a second largest model for rewriting and expanding, to obtain the target requirement text.

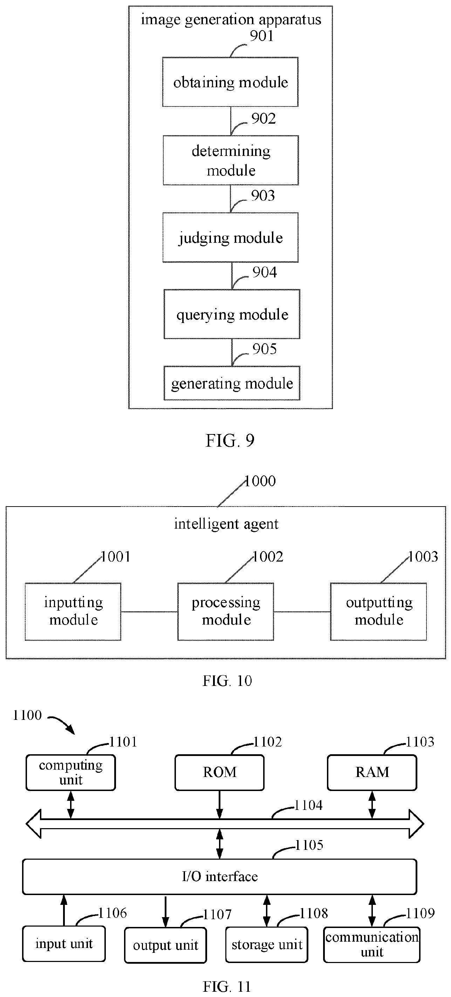

FIG. 9 is a block diagram of an image generation apparatus according to an embodiment of the present invention.

As shown in FIG. 9, the image generation apparatus includes an obtaining module 901, a determining module 902, a judging module 903, a querying module 904 and a generating module 905.

The obtaining module 901 is configured to obtain image generation requirement information. The determining module 902 is configured to determine a target image generation manner according to the image generation requirement information. The judging module 903 is configured to determine whether a reference image query needs to be performed for the image generation requirement information. The querying module 904 is configured to query a first reference image based on the image generation requirement information, in a case where the reference image query needs to be performed for the image generation requirement information. The generating module 905 is configured to generate a target image using the target image generation manner based on the image generation requirement information and the first reference image.

As a possible implementation of the embodiments of the present invention, the judging module 903 is configured to: obtain requirement text in the image generation requirement information; perform requirement understanding on the requirement text to obtain a requirement type corresponding to the image generation requirement information; and determine, based on the requirement type, whether the reference image query needs to be performed for the image generation requirement information.

As a possible implementation of the embodiments of the present invention, the generating module 905 is configured to: generate the target image using the target image generation manner based on the image generation requirement information, in a case where the reference image query does not need to be performed for the image generation requirement information.

As a possible implementation of the embodiments of the present invention, the querying module 904 is configured to: obtain image main-body information comprised in the image generation requirement information; and perform an image query in a preset image library based on the image main-body information, to obtain the first reference image.

As a possible implementation of the embodiments of the present invention, the querying module 904 is configured to: perform the image query in the preset image library based on the image main-body information, to obtain candidate reference images; obtain an image quality of each candidate reference image, and obtain a set quality requirement corresponding to the image generation requirement information; and screen the candidate reference images according to the image quality and the set quality requirement to obtain the first reference image.

As a possible implementation of the embodiments of the present invention, the determining module 902 is configured to: obtain requirement text in the image generation requirement information; input the requirement text into a first large model to perform main-body modification intention detection, to obtain a target main-body modification intention corresponding to the image generation requirement information, in which the target main-body modification intention is used to indicate whether a main-body in the first reference image needs to be modified; and obtain the target image generation manner corresponding to the target main-body modification intention based on a mapping relationship between main-body modification intentions and image generation manners.

As a possible implementation of the embodiments of the present invention, the requirement text corresponds to a text feature, and the generating module 905 is configured to: in response to the target main-body modification intention indicating that the main-body in the first reference image does not need to be modified, perform feature extraction on the first reference image to obtain a first image feature, and obtain a main-body segmentation image in the first reference image; input the first image feature and the text feature into a first image generation model to obtain a background image and main-body layout information; and fuse the main-body segmentation image and the background image according to the main-body layout information to obtain the target image.

As a possible implementation of the embodiments of the present invention, the requirement text corresponds to a text feature, and the generating module 905 is configured to: in response to the target main-body modification intention indicating that the main-body in the first reference image needs to be modified, perform feature extraction on the first reference image to obtain a second image feature; splice the text feature and the second image feature in an interleaved manner based on descriptive objects corresponding to sub-features in the text feature and the second image feature, to obtain an image-text interleaved feature; and input the image-text interleaved feature into a second image generation model to obtain the target image.

As a possible implementation of the embodiments of the present invention, the image generation requirement information includes a second reference image input by a user, and the generating module 905 is configured to: perform feature extraction on the second reference image to obtain a third image feature; and splice the text feature, the second image feature and the third image feature in the interleaved manner based on the descriptive objects corresponding to the sub-features in the text feature, the second image feature and the third image feature, to obtain the image-text interleaved feature.

As a possible implementation of the embodiments of the present invention, the generating module 905 is configured to: obtain requirement text in the image generation requirement information; rewrite and expand the requirement text to obtain target requirement text; and generate the target image using the target image generation manner based on the target requirement text and the first reference image.

As a possible implementation of the embodiments of the present invention, the generating module 905 is configured to: obtain context information of the image generation requirement information; in a case where the image generation requirement information includes a second reference image input by a user, obtain descriptive information of the second reference image; and input the requirement text and at least one of the context information or the descriptive information into a second largest model for rewriting and expanding, to obtain the target requirement text.

It should be noted that the above explanation of the image generation method is also applicable to the image generation apparatus of the embodiment and will not be repeated here.

FIG. 10 is a block diagram of an intelligent agent according to an embodiment of the present invention.

As shown in FIG. 10, the intelligent agent may include an inputting module 1001, a processing module 1002, and an outputting module 1003.

As an example, the inputting module 1001 is configured to obtain image generation requirement information. The processing module 1002 is configured to determine a target image generation manner according to the image generation requirement information, query a first reference image based on the image generation requirement information, and generate a target image using the target image generation manner based on the image generation requirement information and the first reference image. The outputting module 1003 is configured to output the target image.

**As** another example, the inputting module 1001 is configured to obtain image generation requirement information. The processing module 1002 is configured to determine a target image generation manner according to the image generation requirement information, determine whether a reference image query needs to be performed for the image generation requirement information, query a first reference image based on the image generation requirement information in a case where the reference image query needs to be performed for the image generation requirement information, and generate a target image using the target image generation manner based on the image generation requirement information and the first reference image. The outputting module 1003 is configured to output the target image.

According to an embodiment of the present invention, the present invention also provides an intelligent agent system, a readable storage medium and a computer program product.

FIG. 11 shows a block diagram of an intelligent agent system 1100 that can be used to implement an embodiment of the present invention. The intelligent agent system 1100 is intended to represent various forms of digital computers, such as laptop computers, desktop computers, workbenches, personal digital assistants, servers, blade servers, mainframe computers, and other suitable computers. The intelligent agent system may also represent various forms of mobile apparatuses, such as personal digital processing, cellular phones, smart phones, wearable devices, and other similar computing apparatuses. The components shown herein, their connections and relationships, and their functions are merely examples and are not intended to limit the implementation of the present invention described and/or required herein.

As shown in FIG. 11, the intelligent agent system 1100 includes a computing unit 1101, which can perform various appropriate actions and processes according to a computer program stored in a ROM (Read-Only Memory) 1102 or a computer program loaded from a storage unit 1108 to a RAM (Random Access Memory) 1103. Various programs and data required for operations of the intelligent agent system 1100 can also be stored in the RAM 1103. The computing unit 1101, the ROM 1102, and the RAM 1103 are connected to each other via a bus 1104. An I/O (Input/Output) interface 1105 is also connected to the bus 1104.

Multiple components in the intelligent agent system 1100 are connected to the I/O interface 1105, including: an input unit 1106, such as a keyboard, a mouse, etc.; an output unit 1107, such as various types of displays, speakers, etc.; a storage unit 1108, such as a disk, an optical disk, etc.; and a communication unit 1109, such as a network card, a modem, a wireless communication transceiver, etc. The communication unit 1109 allows the intelligent agent system 1100 to exchange information/data with other devices through a computer network such as Internet and/or various telecommunication networks.

The computing unit 1101 may be a variety of general and/or special processing components with processing and computing capabilities. Some examples of the computing unit 1101 include, but are not limited to, a CPU (Central Processing Unit), a GPU (Graphic Processing Units), various dedicated AI (Artificial Intelligence) computing chips, various computing units running machine learning model algorithms, a DSP (Digital Signal Processor), and any appropriate processor, controller, microcontroller, etc. The computing unit 1101 performs various methods and processes described above, such as the image generation method. For example, in some embodiments, the image generation method may be implemented as a computer software program, which is tangibly included in a machine-readable medium, such as a storage unit 1108. In some embodiments, part or all of the computer program may be loaded and/or installed on the intelligent agent system 1100 via the ROM 1102 and/or the communication unit 1109. When the computer program is loaded into the RAM 1103 and executed by the computing unit 1101, one or more steps of the image generation method described above may be performed. Alternatively, in other embodiments, the computing unit 1101 may be configured to execute the image generation method in any other appropriate manner (e.g., by means of firmware).

Various embodiments of the systems and techniques described above herein may be implemented in digital electronic circuit systems, integrated circuit systems, FPGAs (Field Programmable Gate Arrays), ASICs (Application-Specific Integrated Circuits), ASSPs (Application Specific Standard Products), SOCs (System On Chips), CPLDs (Complex Programmable Logic Devices), computer hardware, firmware, software, and/or combinations thereof. These various implementations may include: implementations in one or more computer programs that may be executed and/or interpreted on a programmable system including at least one programmable processor, in which the programmable processor may be a dedicated or general-purpose programmable processor that may receive data and instructions from a storage system, at least one input apparatus, and at least one output apparatus, and transmit data and instructions to the storage system, the at least one input apparatus, and the at least one output apparatus.

The program codes used to implement the method of the present invention can be written in any combination of one or more programming languages. These program codes can be provided to processors or controllers of general-purpose computers, specialized computers, or other programmable data processing devices, so that when executed by the processor or controller, the program codes implement the functions/operations specified in the flowchart and/or block diagram. The program codes can be executed entirely on a machine, partially on a machine, partially on a machine as a standalone software package and partially on a remote machine, or entirely on a remote machine or server.

In the context of this invention, a machine readable medium may be a tangible medium that contains or stores programs for use by or in combination with an instruction execution system, apparatus, or device. The machine readable medium can be machine readable signal medium or machine readable storage medium. The machine readable medium may include, but are not limited to, electronic, magnetic, optical, electromagnetic, infrared, or semiconductor systems, devices, or equipment, or any suitable combination of the above. More specific examples of machine-readable storage medium include electrical connections based on one or more wires, portable computer disks, hard drives, RAM, ROM, EPROM (Electrically Programmable Read Only Memory) or flash memory, fiber optics, CD-ROM (Compact Disc Read Only Memory), optical storage devices, magnetic storage devices, or any suitable combination of the above.

In order to provide interaction with a user, the systems and techniques described herein may be implemented on a computer having a display device (e.g., a Cathode Ray Tube (CRT) or a LCD monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such background components, intermediate computing components, or front-end components. The components of the system may be interconnected by any form or medium of digital data communication (e.g., a communication network). Examples of communication networks include: a local area network (LAN), a wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the defects of difficult management and weak business scalability in the traditional physical host and Virtual Private Server (VPS) service. The server can also be a server of distributed system or a server combined with block-chain.

It should be noted that artificial intelligence is a discipline that studies how computers can simulate certain human thought processes and intelligent behaviors (such as learning, reasoning, thinking, planning, etc.), and includes both hardware-level and software-level technologies. Artificial intelligence hardware technologies generally include technologies such as sensors, dedicated artificial intelligence chips, cloud computing, distributed storage, and big data processing; artificial intelligence software technologies mainly include computer vision technology, speech recognition technology, natural language processing technology, as well as machine learning/deep learning, big data processing technology, knowledge graph technology, and other major directions.

It should be understood that the various forms of processes shown above can be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention. Those skilled in the art should understand that various modifications, combinations, sub-combinations and substitutions can be made according to design requirements and other factors. Any modification, equivalent replacement and improvement made within the principle of the invention shall be included in the protection scope of the invention.

## Claims

1. An image generation method, comprising:
obtaining (101, 201, 301, 501, 601, 701) image generation requirement information;
determining (102, 202, 502, 602, 702) a target image generation manner according to the image generation requirement information;
querying (103, 305, 503) a first reference image based on the image generation requirement information; and
generating (104, 204, 306, 605) a target image using the target image generation manner based on the image generation requirement information and the first reference image.

2. An image generation method, comprising:
obtaining (101, 201, 301, 501, 601) image generation requirement information;
determining (102, 202, 502, 602) a target image generation manner according to the image generation requirement information;
determining (603) whether a reference image query needs to be performed for the image generation requirement information;
querying (604, 706) a first reference image based on the image generation requirement information, in a case where the reference image query needs to be performed for the image generation requirement information; and
generating (104, 204, 306, 605, 707) a target image using the target image generation manner based on the image generation requirement information and the first reference image.

3. The method of claim 2, wherein determining (603) whether the reference image query needs to be performed for the image generation requirement information comprises:
obtaining (703) requirement text in the image generation requirement information;
performing (704) requirement understanding on the requirement text to obtain a requirement type corresponding to the image generation requirement information; and
determining (705), based on the requirement type, whether the reference image query needs to be performed for the image generation requirement information.

4. The method of claim 2 or 3, further comprising:
generating (708) the target image using the target image generation manner based on the image generation requirement information, in a case where the reference image query does not need to be performed for the image generation requirement information.

5. The method of any of claims 1-4, wherein querying (103, 305, 503, 604) the first reference image based on the image generation requirement information comprises:
obtaining (203) image main-body information comprised in the image generation requirement information, and performing an image query in a preset image library based on the image main-body information, to obtain the first reference image.

6. The method of claim 5, wherein performing the image query in the preset image library based on the image main-body information, to obtain the first reference image, comprises:
performing the image query in the preset image library based on the image main-body information, to obtain candidate reference images;
obtaining an image quality of each candidate reference image, and obtaining a set quality requirement corresponding to the image generation requirement information; and
screening the candidate reference images according to the image quality and the set quality requirement to obtain the first reference image.

7. The method of any of claims 1-6, wherein determining (102, 202, 502, 602) the target image generation manner according to the image generation requirement information comprises:
obtaining (302) requirement text in the image generation requirement information;
inputting (303) the requirement text into a first large model to perform main-body modification intention detection, to obtain a target main-body modification intention corresponding to the image generation requirement information, wherein the target main-body modification intention is used to indicate whether a main-body in the first reference image needs to be modified; and
obtaining (304) the target image generation manner corresponding to the target main-body modification intention based on a mapping relationship between main-body modification intentions and image generation manners.

8. The method of claim 7, wherein the requirement text corresponds to a text feature, and generating the target image using the target image generation manner based on the image generation requirement information and the first reference image comprises:
in response to the target main-body modification intention indicating that the main-body in the first reference image does not need to be modified, performing feature extraction on the first reference image to obtain a first image feature, and obtaining a main-body segmentation image in the first reference image; inputting the first image feature and the text feature into a first image generation model to obtain a background image and main-body layout information; and fusing the main-body segmentation image and the background image according to the main-body layout information to obtain the target image;
or
in response to the target main-body modification intention indicating that the main-body in the first reference image needs to be modified, performing feature extraction on the first reference image to obtain a second image feature; splicing the text feature and the second image feature in an interleaved manner based on descriptive objects corresponding to sub-features in the text feature and the second image feature, to obtain an image-text interleaved feature; and inputting the image-text interleaved feature into a second image generation model to obtain the target image.

9. The method of claim 7, wherein the image generation requirement information comprises a second reference image input by a user, and splicing the text feature and the second image feature in the interleaved manner based on the descriptive objects corresponding to the sub-features in the text feature and the second image feature, to obtain the image-text interleaved feature, comprises:
performing feature extraction on the second reference image to obtain a third image feature; and
splicing the text feature, the second image feature and the third image feature in the interleaved manner based on the descriptive objects corresponding to the sub-features in the text feature, the second image feature and the third image feature, to obtain the image-text interleaved feature.

10. The method of any of claims 1-9, wherein generating (104, 204, 306, 605) the target image using the target image generation manner based on the image generation requirement information and the first reference image comprises:
obtaining (504) requirement text in the image generation requirement information, rewriting and expanding the requirement text to obtain target requirement text, and generating the target image using the target image generation manner based on the target requirement text and the first reference image.

11. The method of claim 9, wherein rewriting and expanding the requirement text to obtain the target requirement text comprises:
obtaining context information of the image generation requirement information;
in a case where the image generation requirement information comprises a second reference image input by a user, obtaining descriptive information of the second reference image; and
inputting the requirement text and at least one of the context information or the descriptive information into a second largest model for rewriting and expanding, to obtain the target requirement text.

12. An image generation apparatus, comprising:
an obtaining module (801), configured to obtain image generation requirement information;
a determining module (802), configured to determine a target image generation manner according to the image generation requirement information;
a querying module (803), configured to query a first reference image based on the image generation requirement information; and
a generating module (804), configured to generate a target image using the target image generation manner based on the image generation requirement information and the first reference image.

13. An image generation apparatus, comprising:
an obtaining module (901), configured to obtain image generation requirement information;
a determining module (902), configured to determine a target image generation manner according to the image generation requirement information;
a judging module (903), configured to determine whether a reference image query needs to be performed for the image generation requirement information;
a querying module (904), configured to query a first reference image based on the image generation requirement information, in a case where the reference image query needs to be performed for the image generation requirement information; and
a generating module (905), configured to generate a target image using the target image generation manner based on the image generation requirement information and the first reference image.

14. An intelligent agent system, comprising:
at least one processor; and
a memory connected to the at least one processor communicatively;
wherein the memory stores instructions executable by the at least one processor, the instructions are executed by the at least one processor, to cause the at least one processor to perform the method of any one of claims 1-11.

15. A computer-readable storage medium for storing computer instructions, wherein the computer instructions are used to cause a computer to perform the method of any one of claims 1-11.
